# DEMANDE DE BREVET EUROPEEN

(11) **EP 1 926 194 A1**
(43) Date de publication de la demande: **28.05.2008**
(21) Numéro de dépôt: 07121206.2
(22) Date de dépôt: 21.11.2007
(51) Int. Cl.: H02J 3/12

(54) **Alimentation d'un aéronef en énergie électrique**

(30) Priorité: 23.11.2006 FR 0655072
(71) Demandeur: HISPANO-SUIZA, 92700 Colombes (FR)
(72) Inventeur: Berenger, Serge, 94550, CHEVILLY LARUE (FR)
(74) Mandataire: Joly, Jean-Jacques

(57) **Abrégé**

Un générateur principal (112) fournit une tension alternative d'alimentation d'un réseau électrique de bord (210) de l'aéronef via une ligne principale (120) sur laquelle est monté au moins un contacteur de ligne (122), la tension étant régulée par un régulateur (170). Un réseau électrique moteur (150) fournit de l'énergie électrique à différentes charges situées dans la zone d'un moteur équipant l'aéronef et à un calculateur (130) de régulation du moteur, le réseau électrique moteur (150) ayant une première entrée d'alimentation raccordée à la ligne d'alimentation électrique principale (120) via une ligne d'alimentation électrique secondaire (124), en amont du contacteur de ligne (122), pour recevoir directement une énergie électrique dérivée du générateur principal, sans transiter par le réseau électrique de bord (210) de l'aéronef. Le régulateur (170) de tension fournie par le générateur principal peut-être situé en zone moteur et est alimenté par le réseau électrique moteur (150).

## Description

### Arrière-plan de l'invention

L'invention concerne l'alimentation en énergie électrique des aéronefs et des moteurs les équipant.

Le domaine d'application de l'invention est plus particulièrement celui des avions équipés de moteurs à turbine à gaz. L'invention est toutefois aussi applicable à des avions équipés d'autres types de moteurs et plus généralement à divers types d'aéronefs, à savoir avions ou hélicoptères.

Dans un avion, l'énergie électrique est couramment engendrée par un générateur principal, généralement intégré dans un ensemble démarreur/générateur, qui fournit une tension alternative alimentant un réseau électrique avion via au moins un contacteur de ligne. Le réseau électrique avion distribue l'énergie électrique alternative ou continue nécessaire au fonctionnement de charges électriques situées en zone fuselage ainsi qu'en zone moteur.

La tension alternative fournie par le générateur principal est régulée par un régulateur de tension situé en zone fuselage. Le régulateur de tension commande un courant fourni à une excitatrice couplée au générateur principal pour maintenir la tension alternative fournie par ce dernier dans une plage déterminée. A cet effet, le régulateur de tension est alimenté par une énergie électrique du réseau électrique avion ou d'un générateur auxiliaire tel qu'un générateur à aimants permanents monté sur un arbre commun avec le générateur principal et l'excitatrice.

Un calculateur de régulation moteur ou FADEC ("Full Authority Digital Engine Control") situé en zone moteur assure la régulation du fonctionnement du moteur. Après la phase de démarrage du moteur, pendant laquelle le FADEC est alimenté à partir du réseau électrique avion, l'alimentation électrique du FADEC est assurée par un générateur particulier couplé mécaniquement au moteur.

Par souci de redondance, pour pallier la défaillance d'un quelconque des éléments du dispositif d'alimentation électrique, ces éléments sont habituellement redondés.

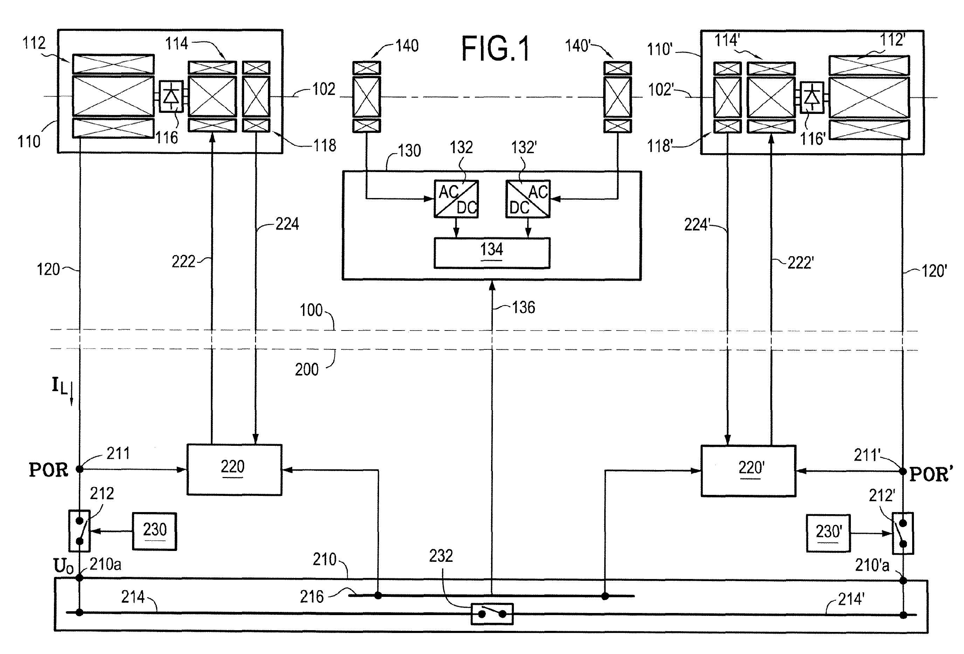

La figure 1 illustre schématiquement une telle architecture connue d'un dispositif d'alimentation électrique utilisé typiquement pour un avion équipé de moteurs à turbine à gaz.

Sur la figure 1, la ligne en tirets 100 symbolise une frontière d'une zone moteur tandis que la ligne en tirets 200 symbolise une frontière d'une zone fuselage de l'avion. Par "zone moteur", on entend ici le moteur et son environnement, à savoir un périmètre incluant notamment le moteur proprement dit, une boîte de transmission ou boîte de relais d'accessoires AGB ("Accessory Gear Box") couplée à un arbre de turbine du moteur, les accessoires montés sur cette boîte, la nacelle du moteur incluant un équipement inverseur de poussée, et le pylône reliant la nacelle à l'aile.

En zone moteur, on trouve un démarreur-générateur 110, ou S/G ("Starter/Generator") comprenant un générateur électrique principal 112 constituant une génératrice synchrone, une excitatrice 114 dont l'induit alimente le rotor du générateur principal par un pont redresseur à diodes tournant 116 et un générateur auxiliaire 118 tel qu'un générateur à aimants permanents. Les rotors du générateur principal 112, de l'excitatrice 114 et du générateur auxiliaire 118 sont montés en commun sur un arbre couplé à la boîte de transmission (non représentée) du moteur.

Le générateur principal fournit une tension alternative qui est transmise à un réseau électrique avion 210, ou réseau électrique de bord primaire, en zone fuselage, par une ligne ou harnais 120. Le réseau de bord avion constitue la source de distribution d'énergie électrique pour les charges électriques activées de façon permanente ou transitoire, que ce soit en zone fuselage ou en zone moteur. L'activation transitoire des charges électriques en zone moteur est couramment réalisée par commande de contacteurs de puissance du réseau de bord avion.

En zone moteur, on trouve aussi un calculateur de régulation moteur ou FADEC 130 qui est alimenté en énergie électrique par un générateur spécifique 140 tel qu'un alternateur à aimants permanents dont le rotor est couplé à la boîte de transmission du moteur. La tension alternative fournie par le générateur 140 est redressée et amenée à un niveau requis par un convertisseur alternatif/continu (AC/DC) 132 pour alimenter les composants 134 du FADEC 130. On note que le FADEC 130 est également relié par une ligne ou harnais 136 à un bus de courant continu 216 du réseau électrique avion en zone fuselage pour pouvoir être alimenté en phase de démarrage du moteur.

Un contacteur de ligne 212 est inséré en entrée du réseau électrique avion entre la ligne 120 et un bus alternatif 214 de ce réseau. L'énergie électrique disponible sur le bus 214 alimente différentes charges directement ou par l'intermédiaire de convertisseurs de tension, notamment un convertisseur alternatif/continu (AC/DC) non représenté qui alimente le bus continu 216.

Le moteur étant en fonctionnement, le démarreur/générateur 110 fonctionne en mode génératrice synchrone. La tension fournie par le générateur principal 112 est régulée en entrée du réseau de bord avion 210 au moyen d'un régulateur de tension 220 situé en zone fuselage. Le régulateur de tension reçoit une information représentative de la tension sur la ligne d'alimentation 120 en un point de régulation POR 211 ("Point of Regulation") situé en zone fuselage en entrée du réseau de bord 210, immédiatement en amont du contacteur de ligne 212. Le régulateur de tension 220 fournit un courant continu à l'inducteur (stator) de l'excitatrice 114 via une ligne d'alimentation ou harnais 222 et le courant alternatif recueilli à l'induit (rotor) de l'excitatrice est redressé par le pont de diodes tournant 116 pour alimenter le rotor (inducteur) du générateur principal 112. Le courant fourni à l'excitatrice 114 par le régulateur de tension 220 est ajusté pour maintenir la valeur de la tension alternative au point POR 211 dans une plage de valeurs prédéterminée. Le régulateur de tension 220 est alimenté en courant alternatif par le générateur auxiliaire 118 via une ligne d'alimentation ou harnais 224. Le courant alternatif est redressé par un redresseur et fourni à un convertisseur continu/continu (DC/DC) qui est commandé pour fournir le courant nécessaire à l'excitatrice.

En mode démarreur, le régulateur de tension 220 est alimenté à partir du bus continu 216 (ou d'une autre source) pour assurer son fonctionnement et fournir une tension alternative à l'inducteur de l'excitatrice 114. Dans le même temps, le contacteur de ligne 212 étant fermé, le stator (induit) du générateur principal est alimenté en courant alternatif par la ligne d'alimentation 120 à partir du bus alternatif 214 (ou d'une autre source), le fonctionnement étant alors celui d'un moteur électrique synchrone. Le moteur de l'avion est alors entraîné en rotation via la boîte de transmission. Après allumage du moteur de l'avion, le contacteur de ligne 212 est ouvert pour être ensuite fermé lorsque le niveau de tension au point de régulation a atteint une valeur minimale prédéterminée.

Un circuit de commande et de protection 230, qui peut être intégré au régulateur de tension, commande le contacteur de ligne 212 en phase de démarrage et en cas de détection de défaut électrique. Le circuit de commande et de protection 230 reçoit notamment à cet effet une information représentative de l'intensité du courant IL sur la ligne d'alimentation 120.

Comme le montre la figure 1, sont aussi prévus, à titre de redondance :
- un second démarreur/générateur 110' semblable au démarreur/générateur 110 avec un générateur principal 112', une excitatrice 114', un pont de diodes tournant 116' et un générateur auxiliaire 118' ;
- un second contacteur de ligne 212' en entrée du réseau de bord avion 210, entre une ligne d'alimentation ou harnais 120', qui alimente le réseau électrique avion avec la tension alternative fournie par le générateur principal 112', et un bus alternatif 214' du réseau de bord avion 210 ;
- un second régulateur de tension 220' semblable au régulateur 220 et alimenté par le générateur auxiliaire 118' via une ligne d'alimentation ou harnais 224' et régulant la tension en un point de régulation POR' 211' en entrée du réseau de bord avion 210, en amont du contacteur de ligne 212', le régulateur de tension 220' fournissant à l'excitatrice 114' via une ligne ou harnais 222' un courant permettant de maintenir la tension au point POR' 211' dans une plage prédéterminée,
- un second circuit 230' de commande et de protection semblable au circuit 230 et pouvant être intégré au régulateur de tension 220', pour commander le contacteur de ligne 212', et
- un second générateur spécifique 140' d'alimentation du FADEC 130 en énergie électrique, semblable au générateur 140.

Un contacteur de ligne 232 est interposé entre les bus alternatifs 224 et 224'. Le contacteur 232 est normalement ouvert. Sa fermeture est commandée par un circuit logique de protection et de configuration de la distribution électrique primaire dans le réseau de bord avion 210 lorsque l'un des générateurs principaux 112, 112' ne peut plus fournir la tension voulue sur le bus respectif 214, 214'.

On notera que le convertisseur AC/DC du FADEC 130 est également doublé, à titre de redondance pour disposer de deux convertisseurs 132, 132' alimentés par les générateurs spécifiques 140, 140' pour fournir de l'énergie électrique aux composants 134 du FADEC.

Une architecture bien connue d'un dispositif d'alimentation électrique telle que décrite ci-avant a prouvé son efficacité mais des inconvénients apparaissent lorsque, comme c'est la tendance actuelle, l'énergie électrique est substituée à l'énergie hydraulique pour actionner différents équipements du moteur et de son environnement. L'acheminement de l'énergie électrique à partir du réseau de bord de l'avion vers des charges externes au fuselage par des lignes électriques ou harnais qui doivent être soigneusement sécurisés et isolés représente une masse et un encombrement importants qui peuvent devenir prohibitifs si le nombre d'équipements électriques à alimenter augmente.

Pour surmonter cette difficulté, il est proposé dans la demande de brevet WO 2006/087379 de la présente déposante, d'intégrer en zone moteur des bus de distribution d'énergie électrique pour différents équipements électriques du moteur et de son environnement. Les bus formant le réseau de distribution en zone moteur sont alimentés à partir du réseau électrique de bord avion, ce qui permet de limiter le nombre de liaisons électriques entre zone moteur et réseau de bord avion.

Il a aussi été proposé dans la demande de brevet EP 1852953, de la présente déposante d'intégrer dans la zone du moteur un réseau de distribution d'énergie électrique avec au moins un bus de distribution d'énergie électrique pour les équipements électriques du moteur et de son environnement et un circuit d'alimentation électrique. Le circuit d'alimentation électrique a une entrée reliée au réseau électrique de bord de l'avion pour recevoir une tension fournie par le réseau de bord et une autre entrée recevant une tension électrique fournie par un générateur électrique entraîné par le moteur de l'avion, et le circuit d'alimentation électrique délivre sur le bus de distribution d'énergie électrique en zone moteur une tension fournie à partir de celle reçue sur une entrée ou sur l'autre entrée en fonction des besoins. Un noeud de disponibilité d'énergie électrique sécurisée est ainsi intégré en zone moteur pour alimenter des charges électriques intégrées au moteur ou à son environnement, une seule liaison avec le réseau électrique de bord de l'avion étant suffisante pour assurer la disponibilité de l'énergie électrique sur le réseau électrique moteur lorsque le générateur électrique spécifique (qui peut être doublé à titre de redondance) ne suffit pas à couvrir les besoins.

### Objet et résumé de l'invention

L'invention a pour but de fournir une architecture optimisée pour un dispositif d'alimentation en énergie électrique pour un aéronef permettant de disposer en zone moteur de l'aéronef d'une énergie électrique suffisante pour alimenter des charges électriques intégrées au moteur et à son environnement, sans pénalisation en termes de masse et d'encombrement.

Ce but est atteint grâce à un dispositif comportant au moins un générateur principal pour fournir une tension alternative, un réseau électrique de bord de l'aéronef, une ligne d'alimentation électrique principale reliant le générateur principal au réseau électrique de bord de l'aéronef pour alimenter le réseau électrique de bord de l'aéronef en tension alternative fournie par le générateur principal, au moins un contacteur de ligne monté sur la ligne d'alimentation électrique principale, un régulateur de la tension fournie par le générateur principal, et un réseau électrique moteur pour fournir de l'énergie électrique à différentes charges situées dans la zone d'un moteur équipant l'aéronef et à un calculateur de régulation du moteur, dispositif dans lequel le réseau électrique moteur a une première entrée d'alimentation raccordée à la ligne d'alimentation électrique principale via une ligne d'alimentation électrique secondaire, en amont du contacteur de ligne, pour recevoir directement une énergie électrique dérivée du générateur principal, sans transiter par le réseau électrique de bord de l'aéronef.

Le dispositif selon l'invention est remarquable en ce que le générateur principal est utilisé directement comme source d'énergie électrique transitoire pour les charges électriques en zone moteur, c'est-à-dire comme source d'énergie électrique pour l'alimentation des charges électriques pendant les périodes où celles-ci sont actionnées. On évite ainsi la nécessité de faire transiter de l'énergie électrique entre zone fuselage et zone moteur, avec les inconvénients qui en résultent en termes de masse et de pertes en ligne. En outre, on évite des occurrences de micro-coupures liées à la technologie électromécanique des contacteurs de puissance du réseau de bord primaire de l'aéronef.

Avantageusement, le régulateur de tension fournie par le générateur principal est situé en zone moteur et est alimenté par le réseau électrique moteur. Des mêmes sources d'énergie peuvent donc être utilisées pour l'alimentation des charges électriques en zone moteur, du calculateur de régulation moteur et du régulateur de tension. Ce dernier pourra être intégré au calculateur de régulation moteur (FADEC).

Selon un mode de réalisation, le régulateur de tension reçoit des informations représentatives de la tension U_{réf} en un point de régulation situé sur la ligne d'alimentation principale en zone moteur en amont du contacteur de ligne et de l'intensité du courant de ligne IL sur la ligne d'alimentation principale en aval du raccordement avec la ligne d'alimentation secondaire et commande le générateur principal de manière à maintenir la tension U_{réf} telle que U_{réf} ≈ Uₒ + Z_{L}I_{L}, Z_{L} étant l'impédance de ligne de la ligne d'alimentation principale entre le point de régulation et l'entrée du réseau électrique de l'aéronef et Uₒ étant la tension alternative désirée en entrée du réseau électrique de l'aéronef. Par tension désirée Uₒ, on entend une tension déterminée, ou une tension ayant une valeur comprise dans une plage déterminée.

Avantageusement encore, le contacteur de ligne est commandé par le régulateur de tension. A cet effet, le régulateur de tension peut recevoir des informations représentatives de l'intensité du courant de ligne IL en entrée du réseau électrique de l'aéronef, de l'intensité I_{sec} du courant secondaire sur la ligne d'alimentation électrique secondaire et de l'intensité du courant I_{φ} en sortie du générateur principal pour commander l'ouverture du contacteur de ligne lorsque I_{φ} - (I_{L} + I_{sec}) ≥ ΔI, ΔI étant un seuil de protection différentielle.

En outre, le régulateur de tension peut être agencé pour commander la fermeture du contacteur de ligne, après démarrage du moteur, lorsque la tension fournie par le générateur principal atteint un seuil prédéterminé.

Avantageusement, le régulateur de tension est relié à un circuit de protection du réseau de bord de l'aéronef pour commander l'ouverture du contacteur de ligne en réponse à un signal reçu du circuit de protection.

Avantageusement encore, le réseau électrique moteur a une deuxième entrée reliée à la sortie d'un générateur auxiliaire pour recevoir une tension électrique auxiliaire fournie par le générateur auxiliaire.

Le générateur auxiliaire et le générateur principal sont de préférence intégrés dans un démarreur/générateur. Ainsi, en comparaison avec l'architecture de dispositif d'alimentation électrique de l'art antérieur, un même générateur auxiliaire est ici utilisé comme source d'énergie auxiliaire pour le calculateur de régulation moteur et le régulateur de tension fournie par le générateur principal, évitant le recours à un générateur spécifique pour le calculateur de régulation moteur. Cette mutualisation des ressources d'énergie auxiliaire permet non seulement l'économie d'un générateur spécifique, mais aussi l'économie d'une ligne d'arbre d'entraînement d'un tel générateur dans la boîte de transmission.

Selon une particularité du dispositif d'alimentation en énergie électrique, le réseau électrique moteur comporte au moins un bus de distribution d'énergie électrique à des charges situées en zone moteur et un circuit d'alimentation électrique qui est relié à la première et à la deuxième entrée du réseau électrique moteur et qui a une sortie reliée au bus de distribution d'énergie électrique pour fournir à celui-ci une énergie électrique dérivée du générateur principal ou du générateur auxiliaire.

Le circuit d'alimentation électrique peut avoir en outre une troisième entrée reliée au réseau de bord de l'aéronef pour recevoir une tension électrique disponible dans celui-ci, de manière à pouvoir alimenter le réseau électrique moteur notamment avant le démarrage du moteur.

### Brève description des dessins

L'invention sera mieux comprise à la lecture de la description faite ci-après, à titre indicatif mais non limitatif, en référence aux dessins annexés sur lesquels :
- la figure 1, déjà décrite, montre de façon très schématique un dispositif connu d'alimentation électrique pour un avion et un moteur l'équipant ;
- la figure 2 montre de façon très schématique un dispositif d'alimentation en énergie électrique selon l'invention pour un aéronef et un moteur équipant l'aéronef ;
- la figure 3 montre de façon plus détaillée un régulateur de tension du dispositif d'alimentation de la figure 2 ; et
- la figure 4 montre de façon plus détaillée un circuit d'alimentation d'un réseau électrique moteur du dispositif de la figure 2.

### Description détaillée d'un mode de réalisation de l'invention

Dans la description qui suit, on envisage l'application de l'invention à un avion équipé de moteurs à turbine à gaz. L'invention est toutefois applicable à des avions équipés de moteurs d'autre type ainsi qu'à des hélicoptères.

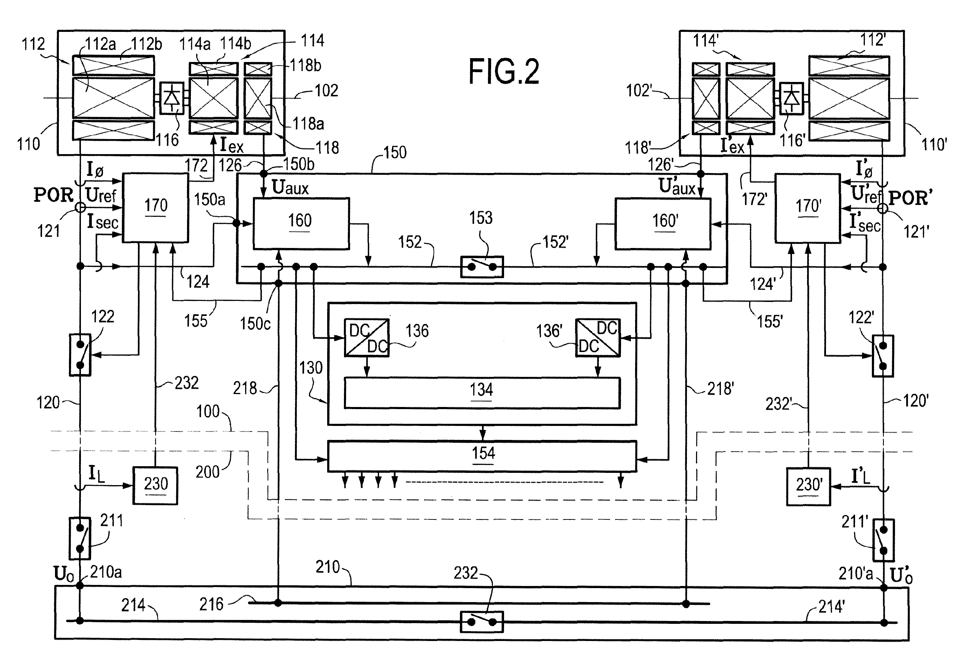

Les éléments communs entre les architectures des dispositifs d'alimentation électrique des figures 1 et 2 portent les mêmes numéros de référence.

Ainsi, sur la figure 2, comme sur la figure 1, les lignes en tirets 100 et 200 symbolisent respectivement les frontières de la zone moteur et de la zone fuselage.

En zone moteur, un générateur électrique principal 112 formé ici par une génératrice synchrone est couplé mécaniquement au moteur par montage du rotor (inducteur) 112a du générateur sur un arbre 102 relié à une boîte d'accessoires montée sur une prise de puissance mécanique couplée à un arbre de turbine du moteur. Le rotor 112a du générateur principal 112 est alimenté en courant continu en étant relié électriquement au rotor (induit) 114a d'une excitatrice 114 par l'intermédiaire d'un pont de diodes tournant 116. Le générateur principal 112 et l'excitatrice 114 forment ici un démarreur/générateur 110 comprenant en outre un générateur auxiliaire 118 tel qu'un générateur à aimants permanents. Le rotor (inducteur) 118a du générateur portant les aimants permanents est monté sur l'arbre 102 en commun avec les rotors 112a et 114a.

Le générateur 112 constitue une source de puissance électrique principale qui fournit au stator (induit) 112b une tension alternative sur une ligne d'alimentation électrique principale ou harnais 120 qui transmet cette tension en entrée 210a d'un réseau électrique de bord 210 de l'avion situé en zone fuselage. Un contacteur de ligne 122 est inséré sur la ligne principale 120, en zone moteur. Un disjoncteur 211 est inséré sur la ligne principale 120 en zone fuselage immédiatement en amont de l'entrée 210a.

Le générateur 118 constitue une source de puissance électrique auxiliaire qui fournit au stator (induit) 118b une tension auxiliaire sur une ligne d'alimentation électrique auxiliaire 126.

Un réseau 150 d'alimentation et de distribution électrique en zone moteur, ou réseau électrique moteur, comprend un bus 152 de distribution d'énergie électrique, par exemple continue, et un circuit d'alimentation électrique 160. Le réseau électrique moteur 150 a une première entrée 150a qui est reliée à la ligne d'alimentation principale 120 par une ligne d'alimentation électrique secondaire 124. La ligne secondaire 124 se raccorde à la ligne principale 120 en amont du contacteur de ligne 122, c'est-à-dire entre ce dernier et le stator (induit) du générateur principal. Une deuxième entrée 150b du réseau électrique moteur est raccordée à la ligne d'alimentation auxiliaire 126. Une troisième entrée 150c du réseau électrique moteur est reliée par une ligne d'alimentation ou harnais 218 à un bus de courant du réseau de bord 210 de l'avion, par exemple un bus continu 216.

Le bus 152 fournit l'énergie électrique nécessaire au fonctionnement d'un calculateur de régulation moteur ou FADEC 130. La tension continue du bus 152 est convertie par un convertisseur continu/continu (DC/DC) 136 pour alimenter les composants 134 du FADEC.

Le bus 152 fournit aussi l'énergie électrique nécessaire au fonctionnement de charges électriques en zone moteur. A cet effet, le bus 152 alimente un circuit 154 de gestion des charges électriques en zone moteur, pour alimenter et commander des charges électriques à partir de signaux de commande fournis par le FADEC 130. Les charges électriques concernées peuvent être notamment : des actionneurs pour des géométries variables du moteur à turbine à gaz telles que des vannes de décharge de compresseur, des organes de calage d'aubes de stator à calage variable d'étages redresseurs de compresseur, des vannes de décharge transitoire de compresseur ou des jeux aux sommets d'aubes de rotor de turbine ; des organes de circuit d'alimentation en carburant tels que des moteurs de pompes d'alimentation, des dispositifs de séparation air/lubrifiant ou des moteurs de pompes de récupération ; et des charges électriques au niveau de la nacelle tels que des actionneurs électromécaniques pour des inverseurs de poussée ou des actionneurs pour des trappes de visite ou de maintenance.

Le circuit 154 de gestion de charges électriques, qui se situe en dehors du cadre de la présente invention, peut être réalisé conformément à ce qui est décrit dans la demande EP 1852347 de la présente déposante.

On notera que certaines charges électriques de l'environnement moteur, tel que des dispositifs de dégivrage de nacelle ou de bords d'aile, peuvent être alimentées directement par la tension alternative disponible sur la ligne d'alimentation secondaire 124, sous la commande du FADEC 130.

Le bus 152 fournit encore l'énergie électrique nécessaire au fonctionnement d'un circuit 170 de régulation de la tension fournie par le générateur principal 112, le circuit de régulation 170 étant situé en zone moteur. Le circuit de régulation alimente le stator (inducteur) 114b de l'excitatrice 114 par une ligne 172. Lors du fonctionnement du démarreur/générateur 110 en mode moteur (démarrage), le circuit de régulation 170 fournit au stator 114b une tension alternative tandis que lors du fonctionnement en mode générateur, le circuit de régulation 170 fournit au stator 114b une tension continue commandée pour réguler la tension alternative produite par le générateur principal 112.

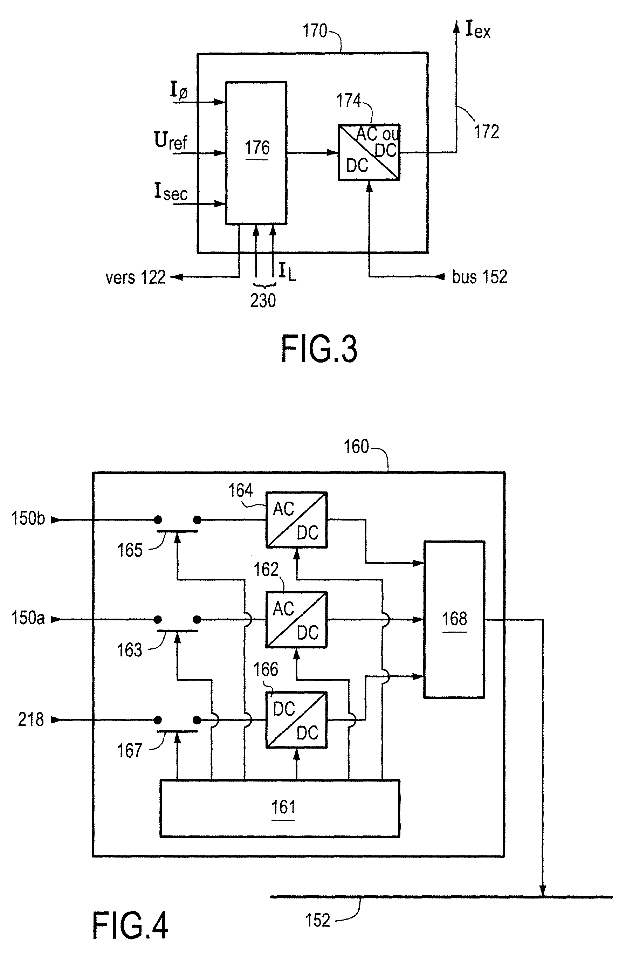

La structure et le fonctionnement du circuit de régulation 170 sont décrits ci-après plus en détail en se référant aussi à la figure 3.

Le circuit de régulation 170 comprend un convertisseur 174, dont l'entrée est reliée au bus 152 et la sortie est reliée à la ligne 172, et un module de commande 176.

Le module de commande 176 reçoit, par l'intermédiaire d'un capteur de mesure de tension, une information représentative de la tension U_{réf} en un point de régulation POR 121 situé en zone moteur sur la ligne 120 en amont du contacteur de ligne 122. Le module de commande 176 reçoit en outre une information représentative de l'intensité du courant de ligne IL en entrée du réseau électrique de bord avion 210. Cette information est transmise par un capteur de mesure d'intensité de courant à un circuit 230 de contrôle et de protection du réseau électrique de bord avion et est acheminée du circuit 230 au régulateur de tension 170 par exemple par un bus de données 232. Le module de commande reçoit encore une information fournie par un capteur de mesure d'intensité de courant et représentative du courant I_{φ} en sortie du générateur principal 112 (courant phase-neutre au stator 112b) ainsi qu'une information fournie par un capteur d'intensité de courant et représentative de l'intensité du courant I_{sec} sur la ligne d'alimentation électrique secondaire 124. D'autres informations peuvent être acheminées au module de commande 176 à partir du circuit 230, notamment des signaux de protection, un ordre de démarrage du moteur ou des informations d'environnement (vitesse, ....).

Le module de commande 176 fournit un signal de commande du convertisseur 174, pour alimenter le stator 114b de l'excitatrice 114 par un courant d'excitatrice Iₑₓ, et un signal de commande d'ouverture ou de fermeture du contacteur de ligne 122. Le fonctionnement du régulateur de tension 170 est le suivant.

Pour la mise en rotation du moteur d'avion en vue de son démarrage, le contacteur de ligne 122 est fermé. Le convertisseur 174 est commandé en mode convertisseur DC/AC par le module de commande 176 pour fournir un courant alternatif Iₑₓ au stator (inducteur) 114b de l'excitatrice tandis qu'un courant alternatif est fourni au stator 112b du générateur principal à partir du réseau de bord 210 de l'avion, le réseau de bord étant alimenté au travers d'un convertisseur de démarrage par une source externe ou un générateur de puissance auxiliaire APU ("Auxiliary Power Unit") ou un autre moteur de l'avion. Le démarreur/générateur 110 fonctionne alors en mode de moteur synchrone (démarreur). Lorsque la vitesse de rotation de l'arbre 102 (ou d'un arbre de turbine du moteur d'avion) atteint un premier seuil, la chambre de combustion du moteur d'avion étant alimentée en carburant et en air, l'allumage du moteur d'avion est commandé par le FADEC 130 par alimentation d'une bougie d'allumage dans la chambre de combustion. L'allumage étant réalisé, l'ouverture du contacteur de ligne 122 est commandée par le régulateur de tension 170. La vitesse de rotation de l'arbre 102 augmente, donc la fréquence de la tension fournie par le générateur principal 112, qui fonctionne alors en mode génératrice synchrone, augmente. Lorsque la tension U_{réf} et la fréquence au point POR 121 atteignent un seuil de tension et un seuil de fréquence donnés, le module de commande 176 du régulateur de tension 170 commande la fermeture du contacteur de ligne 122, dans la mesure où le dépassement d'un seuil de protection différentielle (voir ci-après) n'est pas détecté et où un défaut n'a pas été détecté par le circuit 230 se traduisant par l'émission d'un signal de protection vers le circuit de commande 176. Les seuils de tension et de fréquence sont choisis de manière à assurer que la tension Uₒ et la fréquence sur la ligne 120 en entrée du réseau de bord de l'avion sont au moins égales à des valeurs de tension et de fréquence minimales acceptables par ce réseau.

Le fonctionnement en phase de démarrage du moteur d'avion est tout à fait semblable à celui d'un démarreur/générateur dans une architecture connue de dispositif d'alimentation électrique d'avion telle que celle de la figure 1 si ce n'est que le régulateur de tension 170 et le contacteur de ligne 122 sont tous deux situés en zone moteur. Une autre différence importante par rapport à l'architecture connue réside dans le fait qu'après allumage du moteur et avant fermeture du contacteur de ligne 122, une tension électrique est disponible sur la ligne d'alimentation secondaire 124 pour alimenter le réseau électrique moteur et donc des charges situées en zone moteur.

En mode générateur, le convertisseur 174 est commandé en mode convertisseur DC/DC par le module de commande 176 pour fournir un courant continu Iₑₓ au stator (inducteur) 114b de l'excitatrice. Le courant Iₑₓ est ajusté sous la commande du module de commande 176 de manière que la tension U_{réf} vérifie la formule U_{réf} ≈ Uₒ + Z_{L} I_{L}, Uₒ étant la tension désirée sur la ligne d'alimentation 120 en entrée 210a du réseau de bord de l'avion et Z_{L} étant l'impédance de ligne entre l'entrée 210a et le point POR 121. On notera que cette impédance Z_{L} varie en fonction de la fréquence f de la tension fournie par le générateur principal 112. Cette fonction de variation de l'impédance Z_{L} est mémorisée dans le module de commande 176. La valeur désirée Uₒ est une valeur située dans une plage allant d'un seuil minimum Uₒₘᵢₙ à un seuil maximum Uₒₘₐₓ acceptables par le réseau de bord 210 de l'avion.

Le régulateur de tension 170 assure également une fonction de protection. Ainsi, l'ouverture du contacteur de ligne est commandée par le module de commande 176 lorsque I_{φ} - (IL + I_{sec}) ≥ ΔI, ΔI étant un seuil de protection différentielle prédéterminé, indiquant un dépassement de seuil de fuite de courant sur la ligne d'alimentation 120. Le module de commande 176 peut aussi recevoir du circuit de protection 130 un ordre d'ouverture du contacteur de ligne 122 lorsqu'un défaut est détecté, tel qu'une surtension, sur le réseau de bord 210 de l'avion, par exemple sur le bus alternatif 214. A titre de sécurité supplémentaire, un contacteur de ligne supplémentaire commandé directement par le circuit de protection 230 pourra être inséré sur la ligne d'alimentation principale 120 en zone fuselage, en entrée du réseau de bord 210 de l'avion, en lieu et place du disjoncteur 211.

Le régulateur de tension 170 peut être intégré au FADEC 130, les fonctions du module de commande 176 étant alors assurées par des ressources logiques internes du FADEC 130.

La structure et le fonctionnement du circuit d'alimentation électrique 160 seront maintenant décrits plus en détail en se référant aussi à la figure 4.

Le circuit d'alimentation 160 comprend un premier convertisseur alternatif/continu, (AC/DC) 162 dont l'entrée est reliée à l'entrée 150a du réseau électrique moteur via un contacteur 163 pour recevoir la tension alternative disponible sur la ligne d'alimentation électrique secondaire 124. La sortie du convertisseur AC/DC 162 est reliée au bus de courant continu 152 via un circuit de bus continu 168 par exemple de type HVDC alimentant le bus continu 152. Un deuxième convertisseur alternatif/continu (AC/DC) 164 a son entrée reliée à l'entrée 150b du réseau électrique moteur via un contacteur 165 pour recevoir la tension alternative disponible sur la ligne d'alimentation électrique auxiliaire 126. La sortie du convertisseur AC/DC 164 est reliée au circuit de bus 168. Un convertisseur continu/continu (DC/DC) 166 a son entrée reliée à l'entrée 150c du réseau électrique moteur via un contacteur 167 pour recevoir la tension continue fournie par la ligne 218, et sa sortie reliée au circuit de bus 168.

Le circuit d'alimentation 160 comprend un module de commande 161 qui commande les contacteurs 163, 165, 167 et qui commande les convertisseurs 162, 164, 166 pour délivrer sur le bus continu 152 une tension continue d'amplitude prédéterminée.

Le contacteur 167 est commandé à l'état ouvert, c'est-à-dire qu'il est fermé au repos pour alimenter le réseau électrique moteur 150 avant le démarrage du moteur d'avion tandis que les contacteurs 163 et 165, qui sont commandés à l'état fermé, sont alors ouverts. On notera qu'une alimentation externe autre que le bus continu 216 du réseau de bord 210 de l'avion pourrait être utilisée.

Le module de commande 161 reçoit du régulateur de tension 170, ou directement d'un capteur de tension, une information représentative de la tension U_{réf} qui est disponible sur la ligne d'alimentation secondaire 124 après démarrage du moteur d'avion et ouverture du contacteur de ligne 122. Lorsque la tension U_{réf} atteint un seuil prédéterminé U_{réfmin} considéré comme suffisant pour alimenter le réseau électrique moteur, la fermeture du contacteur 165 et l'ouverture du contacteur 167 sont commandées par le module de commande 161, lequel commande également le convertisseur AC/DC 162 pour maintenir la tension continue désirée sur le bus continu 152. On notera que, comme déjà indiqué, l'alimentation du réseau électrique moteur 150 par la tension fournie par le générateur principal est avantageusement démarrée lorsque la tension U_{réf} atteint un seuil inférieur à celui à partir duquel le contacteur de ligne 122 est fermé.

Le module de commande 161 reçoit aussi d'un capteur de mesure de tension une information représentative de l'amplitude de la tension Uₐᵤₓ fournie par le générateur auxiliaire 118 sur la ligne d'alimentation auxiliaire 126. Si la tension U_{réf} tombe en dessous du seuil minimum U_{réfmin}, le module de commande 161 commande la fermeture du contacteur 165 pour permettre au réseau électrique moteur d'être alimenté par la ligne d'alimentation secondaire 126, le contacteur 163 étant relâché à l'état ouvert. Le convertisseur AC/DC 164 est commandé par le module de commande 161 pour maintenir la tension désirée sur le bus continu 152. Si la tension Uₐᵤₓ devient insuffisante, en cas de panne, le contacteur 163 est relâché à l'état ouvert et le contacteur 167 est relâché à l'état fermé de sorte qu'une alimentation du réseau électrique moteur 150 peut toujours être assurée à partir du réseau électrique de bord 210 de l'avion.

On notera que le module de commande 161 peut être intégré au FADEC 130.

Comme le montre la figure 2, les composants du dispositif d'alimentation électrique qui vient d'être décrit sont doublés à titre de redondance.

Ainsi, un second générateur principal 112' et son excitatrice 114' interconnectés par un pont de diodes tournant 116' ont leurs rotors couplés à un arbre 102' entraîné en rotation par liaison avec la boîte de transmission du moteur d'avion, ainsi que le rotor d'un générateur auxiliaire 118', l'ensemble 112', 114', 116' et 118' formant un démarreur/générateur 110' similaire au démarreur/générateur 110.

Une ligne d'alimentation principale 120' sur laquelle un contacteur de ligne 122' est interposé en zone moteur transmet la tension produite par le générateur principal 112' sur une entrée 210'a du réseau électrique de bord de l'avion, via un disjoncteur 211' situé en zone fuselage, pour alimenter un bus alternatif 214' de ce réseau.

Le réseau électrique moteur 150 comprend un second bus continu 152' et un second circuit d'alimentation sécurisée 160' analogue au circuit 160. Le circuit 160' reçoit une tension fournie par le générateur principal 112' via une ligne d'alimentation secondaire 124' qui se raccorde à la ligne d'alimentation principale 120' en amont du contacteur de ligne 122' et une tension fournie par le générateur auxiliaire 118' via une ligne d'alimentation auxiliaire 126'. Le bus 152' fournit une tension continue à un convertisseur DC/DC 136' d'alimentation du FADEC 130, celui-ci étant, de façon connue, réalisée avec redondance en deux parties identiques, qui sont alimentés par les bus 152 et 152'.

De même, le circuit 154 de gestion de charges électriques en zone moteur est alimenté en parallèle par les bus 152 et 152'.

Un contacteur de ligne 153 est inséré entre les bus 152, 152`. Le contacteur 153 est normalement ouvert. Sa fermeture est commandée en cas de panne lorsque la tension sur l'un des bus 152, 152' devient insuffisante.

Un second régulateur de tension 170' analogue au régulateur 170 et alimenté par le bus 152' régule la tension en un point de régulation POR 121' situé en zone moteur sur la ligne d'alimentation principale 120' en amont du contacteur 122'. Le régulateur de tension 170' situé également en zone moteur reçoit une information représentative de la tension U'_{réf} au point POR 121', ainsi qu'une information retransmise sur un bus de données 232' par un circuit de contrôle et protection 230' en zone fuselage et représentative de l'intensité du courant de ligne I'_{L}, et commande le courant I'ₑₓ fourni à l'excitatrice 114'. Le régulateur de tension 170' commande le contacteur de ligne 122' et reçoit également des informations représentatives du courant I'_{sec} sur la ligne d'alimentation secondaire 126' et du courant phase/neutre I'_{φ} en sortie du générateur principal 112' pour assurer une fonction de protection différentielle. Le régulateur de tension 170' peut également recevoir du circuit 230' de contrôle et de protection des informations de protection, un ordre de démarrage et des informations d'environnement, pour commander l'ouverture du contacteur de ligne 122' en cas de détection de défaut dans le réseau électrique de bord de l'avion 210 ou au démarrage.

Dans le réseau 210, un contacteur 232 est interposé entre les bus alternatifs 214, 214', le contacteur 232 étant fermé en cas de défaillance d'un des générateurs principaux 112, 112', le générateur défaillant étant alors isolé des bus 214, 214' par ouverture du contacteur de ligne associé 122 ou 122'.

## Revendications

1. Dispositif d'alimentation en énergie électrique pour un aéronef, le dispositif comportant :
au moins un générateur principal (112) pour fournir une tension alternative, un réseau électrique de bord (210) de l'aéronef, une ligne d'alimentation électrique principale (120) reliant le générateur principal (112) au réseau électrique de bord (210) de l'aéronef pour alimenter le réseau électrique de bord (210) de l'aéronef en tension alternative fournie par le générateur principal, au moins un contacteur de ligne (122) monté sur la ligne d'alimentation électrique principale, un régulateur (170) de la tension fournie par le générateur principal, et un réseau électrique moteur (150) pour fournir de l'énergie électrique à différentes charges situées dans la zone d'un moteur équipant l'aéronef et à un calculateur (130) de régulation du moteur,
**caractérisé en ce que** le réseau électrique moteur (150) a une première entrée d'alimentation raccordée à la ligne d'alimentation électrique principale (120) via une ligne d'alimentation électrique secondaire (124), en amont du contacteur de ligne (122), pour recevoir directement une énergie électrique dérivée du générateur principal, sans transiter par le réseau électrique de bord (210) de l'aéronef.

2. Dispositif selon la revendication 1, **caractérisé en ce que** le régulateur (170) de tension fournie par le générateur principal est situé en zone moteur et est alimenté par le réseau électrique moteur (150).

3. Dispositif selon la revendication 2, **caractérisé en ce que** le régulateur de tension est intégré au calculateur de régulation moteur.

4. Dispositif selon l'une quelconque des revendications 2 et 3, **caractérisé en ce que** le régulateur de tension (170) reçoit des informations représentatives de la tension U_{ref} en un point de régulation (121) situé sur la ligne d'alimentation principale (120) en zone moteur en amont du contacteur de ligne (122) et de l'intensité du courant de ligne I_{L} sur la ligne d'alimentation principale (120) en aval du raccordement avec la ligne d'alimentation secondaire (124) et commande le générateur principal de manière à maintenir la tension U_{ref} telle que U_{ref} ≈ Uₒ + Z_{L}I_{L}, Z_{L} étant l'impédance de ligne de la ligne d'alimentation principale entre le point de régulation et l'entrée du réseau électrique de l'aéronef et Uₒ étant la tension alternative désirée en entrée du réseau électrique (210) de l'aéronef.

5. Dispositif selon l'une quelconque des revendications 2 à 4, **caractérisé en ce que** le contacteur de ligne (122) est commandé par le régulateur de tension (170).

6. Dispositif selon la revendication 5, **caractérisé en ce que** le régulateur de tension (170) reçoit des informations représentatives de l'intensité du courant de ligne IL en entrée du réseau électrique de bord (210) de l'aéronef, de l'intensité I_{sec} du courant secondaire sur la ligne d'alimentation électrique secondaire (124) et de l'intensité du courant 1_{φ} en sortie du générateur principal pour commander l'ouverture du contacteur de ligne (122) lorsque I_{φ} - (I_{L} + I_{sec}) ≥ ΔI, ΔI étant un seuil de protection différentielle.

7. Dispositif selon l'une quelconque des revendications 5 et 6, **caractérisé en ce que** le régulateur de tension (170) est agencé pour commander la fermeture du contacteur de ligne (122), après démarrage du moteur, lorsque la tension fournie par le générateur principal (112) atteint un seuil prédéterminé.

8. Dispositif selon l'une quelconque des revendications 5 à 7, **caractérisé en ce que** le régulateur de tension (170) est relié à un circuit (230) de protection du réseau de bord de l'aéronef pour commander l'ouverture du contacteur de ligne (122) en réponse à un signal reçu du circuit de protection.

9. Dispositif selon l'une quelconque des revendications 1 à 8, **caractérisé en ce que** le réseau électrique moteur (150) a une deuxième entrée reliée à la sortie d'un générateur auxiliaire (118) pour recevoir une tension électrique auxiliaire fournie par le générateur auxiliaire.

10. Dispositif selon la revendication 9, **caractérisé en ce que** le générateur auxiliaire (118) et le générateur principal (112) sont intégrés dans un démarreur/générateur (110).

11. Dispositif selon l'une quelconque des revendications 9 et 10, **caractérisé en ce que** le réseau électrique moteur (150) comporte au moins un bus (152) de distribution d'énergie électrique à des charges situées en zone moteur et un circuit d'alimentation électrique (160) qui est relié à la première et à la deuxième entrée du réseau électrique moteur et qui a une sortie reliée au bus de distribution d'énergie électrique pour fournir à celui-ci une énergie électrique dérivée du générateur principal (112) ou du générateur auxiliaire (118).

12. Dispositif selon la revendication 11, **caractérisé en ce que** le circuit d'alimentation électrique (160) a une troisième entrée reliée au réseau de bord (210) de l'aéronef pour recevoir une tension électrique disponible dans celui-ci.
